# EUROPÄISCHE PATENTANMELDUNG

(11) **EP 2 851 604 A1**
(43) Veröffentlichungstag der Anmeldung: **25.03.2015**
(21) Anmeldenummer: 14184948.9
(22) Anmeldetag: 16.09.2014
(51) Int. Cl.: F16P 3/02, B23Q 11/00

(54) **Schwenkbare Schutzabdeckung sowie Schutzabdeckungsanordnung mit einer schwenkbaren Schutzabdeckung**

(30) Priorität: 16.09.2013 DE 202013008153 U
(71) Anmelder: Arno Arnold GmbH, 63179 Obertshausen (DE)
(72) Erfinder: Kreutzer, Thomas, 64291 Darmstadt (DE); Roehnert, Maximilian, 60435 Frankfurt (DE)
(74) Vertreter: advotec.

(57) **Zusammenfassung**

Die Erfindung betrifft eine Schutzabdeckung (10) zur Abtrennung eines Arbeitsraums einer Maschine von dem sich darüber befindlichen Luftraum, mit einer Schutzabdeckungsführung an der eine Mehrzahl Schutzabdeckungssegmente, welche jeweils zumindest einen an der Schutzabdeckungsführung gelagerten Stützrahmen (12,13) und zumindest ein Abdeckelement umfassen, gegeneinander verschiebbar gelagert sind. Hierbei ist vorgesehen, dass die Schutzabdeckungsführung um einen Schwenkwinkel in einer Schwenklagerung um eine Schwenkachse zwischen einer Nutzstellung und einer Freigabestellung schwenkbar gelagert ist.

Weiterhin betrifft die Erfindung eine Schutzabdeckungsanordnung, welche zumindest eine schwenkbare Schutzabdeckung umfasst.

## Beschreibung

Die Erfindung betrifft eine Schutzabdeckung, insbesondere zur Abtrennung eines Arbeitsraums einer Maschine von dem sich darüber befindlichen Luftraum, mit einer Schutzabdeckungsführung, an der eine Mehrzahl Schutzabdeckungssegmente verschiebbar angeordnet ist, gemäß dem Oberbegriff des Anspruchs 1. Weiterhin betrifft die Erfindung eine Schutzabdeckungsanordnung mit einer entsprechenden Schutzabdeckung.

Aus dem Stand der Technik sind verschiedene Ausführungsformen von Schutzabdeckungen, insbesondere von Werkzeugmaschinen oder dergleichen, bekannt. Hierzu weist die Schutzabdeckung eine Schutzabdeckungsführung sowie eine Mehrzahl von Schutzabdeckungssegmente auf. Die Schutzabdeckungssegmente sind hierbei an der Schutzabdeckungsführung verschiebbar gelagert, so dass bei einer Relativbewegung eines bewegten Maschinenteils ein Zusammenziehen bzw. Auseinanderschieben der Schutzabdeckung erfolgen kann.

Weiterhin sind aus dem Stand der Technik Ausführungen bekannt, bei denen der Arbeitsraum einer Werkzeugmaschine nach obenhin zum darüber befindlichen Luftraum durch eine Dachabdeckung abgedeckt wird. Sofern ein bewegliches Maschinenteil die Dachabdeckung beispielsweise mit einer Werkzeugspindel durchdringt werden hierbei analoge Abdeckungssysteme eingesetzt, welche ebenso zur Abdeckung eines Maschinenbetts eingesetzt werden.

Von großem Nachteil bei bekannten Schutzabdeckungen zur Abtrennung des Arbeitsraums einer Maschine gegenüber dem sich darüber befindenden Luftraum ist es, dass diese nicht zum Zwecke der Beladung der Maschine entfernbar sind. Dies führt zu dem Hindernis, dass in aller Regel eine Beladung des Maschinentisches mit einem schweren Arbeitsstück mittels eines Kranes nicht möglich ist. In Folge dessen weisen in aller Regel entsprechende Maschinen zur Bearbeitung größerer Werkstücke keine Abdeckung oberhalb des Arbeitsraums auf.

Aufgabe der Erfindung ist es daher, eine Schutzabdeckung zur Abtrennung des Arbeitsraums einer Maschine von dem sich darüber befindenden Luftraum zu ermöglichen, wobei unvermindert eine Beladung des Maschinentisches durch einen Kran möglich ist.

Die gestellte Aufgabe wird durch eine erfindungsgemäße Ausführungsform nach der Lehre des Anspruchs 1 gelöst. Zwei erfindungsgemäße Schutzabdeckungsanordnungen mit erfindungsgemäßer Schutzabdeckung sind im Anspruch 10 und im Anspruch 13 angegeben.

Vorteilhafte Ausführungsformen sind Gegenstand der Unteransprüche.

Die gattungsgemäße Schutzabdeckung weist zunächst einmal eine Schutzabdeckungsführung auf, welche in einer Bewegungsrichtung ausgerichtet ist. Weiterhin weist die Schutzabdeckung eine Mehrzahl von Schutzabdeckungssegmenten auf, welche jeweils zumindest einen Stützrahmen und zumindest ein Abdeckelement umfassen. Hierbei ist der Stützrahmen des jeweiligen Schutzabdeckungssegments in der Bewegungsrichtung verschiebbar an der Schutzabdeckungsführung gelagert, wobei der Stützrahmen die Stabilität des jeweiligen Schutzabdeckungssegments gewährleistet. Demgegenüber gewährleisten die auseinander ziehbaren und zusammen schiebbaren Abdeckelemente der Schutzabdeckungssegmente insgesamt die Abdeckung eines Bereichs der jeweiligen Maschine, wobei ein bewegtes Maschinenteil in einer Führungsrichtung verschiebbar ist. Hierzu ist ein vorderes Schutzabdeckungssegment am beweglichen Maschinenteil anordenbar. Demgegenüber ist ein hinteres Schutzabdeckungssegment an einem vom bewegten Maschinenteil fernen Ende der Schutzabdeckungsführung unmittelbar oder mittelbar befestigt.

Zur Ermöglichung der Bewegung des beweglichen Maschinenteils unter Veränderung der Lage der Schutzabdeckungssegmente mit einem Auseinanderziehen bzw. Zusammenschieben bei Gewährleistung der Abdeckung des abzudeckenden Bereichs an der jeweiligen Maschine ist es erforderlich, dass zumindest die Bewegungsrichtung und die Führungsrichtung in einer gemeinsamen Führungsebene angeordnet sind.

In einer Nutzstellung dient die Schutzabdeckungsführung beispielsweise zur Abtrennung des Arbeitsraums der Maschine von dem sich darüber befindlichen Luftraum. Entsprechend kann in der Nutzstellung das bewegte Maschinenteil bestimmungsgemäß mit einem Auseinanderziehen bzw. einem Zusammenschieben der Schutzabdeckungssegmente verfahren werden.

Die gestellte Aufgabe wird erfindungsgemäß nunmehr dadurch gelöst, dass die Schutzabdeckungsführung in einer Schwenklagerung um einen Schwenkwinkel an einer Schwenkachse schwenkbar zwischen der Nutzstellung und einer Freigabestellung gelagert ist.

Während die Schutzabdeckungsführung in der Nutzstellung zur Abtrennung des Arbeitsraums der Maschine von dem sich darüber befindlichen Luftraum eingesetzt werden kann, ermöglicht demgegenüber die Freigabestellung die Beladung einer Maschine mittels eines Kranes. Entsprechend erfolgt ein Schwenken von der Nutzstellung in die Freigabestellung um den Schwenkwinkel. Naheliegend erfolgt mit dem Schwenken der Schutzabdeckungsführung unmittelbar ein Schwenken der Schutzabdeckungssegmente um die Schwenkachse. Durch das Wegschwenken der Schutzabdeckungsführung nebst den Schutzabdeckungssegmenten wird oberhalb des Maschinentisches ein Freiraum geschaffen, welcher im Normalfall von der Schutzabdeckung verdeckt wird. Somit wird die ansonsten unmögliche Kranbeladung eines Maschinentisches ermöglicht.

In der Nutzstellung entspricht in aller Regel die Bewegungsrichtung der Führungsrichtung. Jedoch ist es für die erfindungsgemäße Ausführung unerheblich, ob in der Nutzstellung die Bewegungsrichtung geringfügig, beispielsweise bis zu 15°, von der Führungsrichtung abweicht. Vorteilhaft im Falle der Abtrennung des Arbeitsraums der Maschine gegenüber dem sich darüber befindlichen Luftraum ist es, wenn die Bewegungsrichtung in der Nutzstellung näherungsweise wagerecht ausgerichtet ist. In aller Regel ist zumindest die Führungsrichtung des bewegten Maschinenteils horizontal ausgerichtet. Entsprechend ist bei der Abtrennung des Arbeitsraums von dem darüber liegenden Luftraum eine Abweichung der Bewegungsrichtung ausgehend von der Horizontalen mit einem Winkel von ±15° unerheblich.

In einer einfachen Ausführung ist die Schwenkachse feststehend angeordnet. Jedoch ist es für die erfindungsgemäße Ausführung unerheblich, ob sich die Schwenkachse in der Schwenkbewegung verlagert indem beispielsweise eine Mehrgelenklagerung eingesetzt wird. Maßgeblich ist vor allem die Kollisionsfreiheit beim Schwenken der Schutzabdeckung von der Nutzstellung in die Freigabestellung sowie die Gewährleistung der Funktion der Schutzabdeckung als solches mit einer Verschiebbarkeit der Schutzabdeckungssegmente relativ zueinander.

In welcher Art und Weise das Schutzabdeckungssegment ausgeführt ist, ist zunächst nebensächlich, sofern die geforderte Abtrennung des Arbeitsraums der Maschine von dem sich darüber befindlichen Luftraum gewährleistet wird. Zumindest bedarf es einer geschlossenen Abdeckung vom vorderen Schutzabdeckungssegment bis zum letzten Schutzabdeckungssegment mittels der Abdeckelemente der einzelnen Schutzabdeckungssegmente.

In einer ersten Ausführungsform wird hierzu das Schutzabdeckungssegment jeweils L-förmig ausgeführt, und umfasst einen Stützrahmen und einen Abdeckschenkel als Abdeckelement. Die Abdeckung des Maschinenbereichs bzw. des Arbeitsraums sowie die teleskopartige Verschiebbarkeit der Abdecksegmente zueinander bei einem Zusammenschieben und einem Auseinanderziehen werden dadurch gewährleistet, indem die Abdeckschenkel benachbarter Schutzabdeckungssegmente aufeinander zur Anlage gelangen. Analog ist es möglich, an jedem Stützrahmen ein L-förmiges Teleskopblech anzuordnen, wobei ein erster Schenkel im Wesentlichen parallel zum Stützrahmen an diesem befestigt wird und ein zweiter Schenkel des L-förmigen Teleskopblechs den Abdeckschenkel bildet.

In alternativer Ausführungsform wird das Abdeckelement von einem Faltenbalgabschnitt gebildet, welcher zumindest bereichsweise flexibel ausgeführt ist. Zur Stabilisierung der flexiblen Faltenbalgabschnitte werden diese jeweils an benachbarten Stützrahmen befestigt. Die Faltenbalgabschnitte können hierbei sowohl einzeln je Schutzabdeckungssegment als auch als ein Faltenbalg ausgeführt sein, welcher sich über sämtliche Schutzabdeckungssegmente erstreckt.

Der Faltenbalgabschnitt kann hierbei in vorteilhafter Weise aus einem insgesamt flexiblen, beispielsweise textilen, Material hergestellt sein. In besonders vorteilhafter Weise wird jedoch der Faltenbalgabschnitt von zumindest zwei flächigen, im Wesentlichen steifen plattenförmigen Bereichen gebildet, welche flexibel miteinander sowie flexibel am Stützrahmen angebunden sind. Hierbei kann beispielsweise eine Verbindung der plattenförmigen Bereiche über ein Filmscharnier erfolgen.

Des Weiteren ist es uneingeschränkt möglich, das Schutzabdeckungssegment mit einem Stützrahmen und sowohl einem Abdeckschenkel als Abdeckelement zu versehen als auch ergänzend einen Faltenbalgabschnitt vorzusehen.

Die konkreten Ausführungsformen der Stützrahmen, der L-förmigen Schutzabdeckungssegmente sowie der Faltenbalgabschnitte sind dem Fachmann hinreichend geläufig, so dass es diesbezüglich keiner näheren Erläuterung bedarf.

Die Verstellung der Schutzabdeckungsführung von der Nutzstellung in die Freigabestellung kann in einfachster Ausführungsform von Hand durchgeführt werden. Besonders vorteilhaft ist jedoch, wenn ein Schwenkantrieb eingesetzt wird, welcher die Schutzabdeckung bei Bedarf von der Nutzstellung in die Freigabestellung schwenken kann.

Zur Gewährleistung der Zugänglichkeit des Arbeitsraums mittels eines Kranes zur Einbringung entsprechend schwerer Arbeitsstücke ist es vorteilhaft, wenn der Schwenkwinkel zwischen der Nutzstellung und der Freigabestellung zumindest 45° beträgt. Besonders vorteilhaft ist hierbei ein Schwenkwinkel von zumindest 60°.

Die Realisierung der Schutzabdeckungsführung kann auf unterschiedliche Weise erfolgen, wobei in einer vorteilhaften Ausführung diese eine auf einer linken Seite der Schutzabdeckung angeordnete linke Führungsschiene und eine auf der rechten Seite der Schutzabdeckung angeordnete rechte Führungsschiene aufweist. Die einzelnen Schutzabdeckungssegmente sind in diesem Fall mit den Stützrahmen an der linken Führungsschiene und der rechten Führungsschiene gelagert. Unerheblich ist es zunächst, ob die Schutzabdeckungssegmente zwischen den Führungsschienen angeordnet sind oder sich insbesondere mit dem Abdeckelement demgegenüber bis über eine oder beide Führungsschienen erstrecken. Bei Betrachtung des beweglichen Maschinenteils mit dessen Bewegung in der Führungsrichtung sind verschiedene Situationen zu unterscheiden, wobei die erfindungsgemäße Ausführungsform für entsprechend verschiedene Bereiche unterschiedlich auszuführen ist.

In einer ersten besonders vorteilhaften Ausführungsform wird die Schwenkachse in der Führungsrichtung ausgerichtet, wobei in Folge dessen die Führungsrichtung der Bewegungsrichtung des bewegten Maschinenteils unabhängig von der Nutzstellung oder der Freigabestellung entspricht.

Befindet sich beispielsweise die Schwenkachse in der Nähe einer linken Seite der Schutzabdeckung und somit an einem linken Ende der länglichen Schutzabdeckungssegmente, erfolgt mit einem Schwenken von der Nutzstellung in die Freigabestellung eine Verlagerung der rechten Seite der Schutzabdeckung und somit des jeweils rechten Endes der Schutzabdeckungssegmente. Demgegenüber wird die Schutzabdeckung an der linken Seite nahe der Schwenkachse bzw. das linke Ende der Schutzabdeckungssegmente nur unwesentlich verlagert.

Wenngleich insbesondere bei der Verwendung der erfindungsgemäßen Schutzabdeckung zur Abtrennung eines Arbeitsraums gegenüber dem darüber liegenden Luftraum ein sich am Ende auf einer oder beiden Seiten der Schutzabdeckung befindlicher freier Eckbereich nicht als besonders kritisch darstellt, so besteht dennoch die Gefahr, dass beispielsweise Späne einer Werkzeugmaschine in den Eckbereich eindringen und eine Schädigung der Schutzabdeckung und/oder der Maschine herbeiführen kann. Sofern die Schutzabdeckungssegmente mit zum Arbeitsraum weisenden teleskopartig verschiebbaren Abdeckschenkeln als Abdeckelemente versehen sind, ist es von besonderem Vorteil, wenn zur Verhinderung des Eindringens von Schmutzpartikeln bzw. Späne im Eckbereich der Schutzabdeckung die Schutzabdeckungssegmente jeweils mit einer Abdeckungsverlängerung versehen sind. Diese ist hierbei abgewinkelt von der Abdeckfläche am Ende des jeweiligen Schutzabdeckungssegments anzuordnen und deckt den Eckbereich neben der Schutzabdeckung zumindest in der Nutzstellung ab. Unerheblich ist es diesbezüglich, ob beim Hochschwenken von der Nutzstellung in die Freigabestellung der betrachtete Eckbereich ungeschützt ist.

Hinsichtlich der Anordnung der Schwenkachse in Relation zur Schutzabdeckungsführung stehen verschiedene Möglichkeiten zur Verfügung. Bei einer Ausrichtung der Schwenkachse in der Führungsrichtung, bei der beispielsweise die Schwenkachse im Bereich einer linksseitigen Führungsschiene angeordnet ist, ist es zum einen möglich, die Schwenkachse im Bereich zwischen der rechtsseitigen Führungsschiene und der linksseitigen Führungsschiene, d.h. im Bereich der Schutzabdeckungssegmente, anzuordnen. Vorteilhaft ist es jedoch, wenn sich die Schwenkachse in einem Bereich außerhalb der Schutzabdeckungssegmente befindet, so dass sich die linksseitige Führungsschiene zwischen der Schwenkachse und der rechtsseitigen Führungsschiene befindet. Es ist offensichtlich, dass diesbezüglich die Schenkachse sowie die rechtsseitige Führungsschiene und die linksseitige Führungsschiene bzw. die Abdeckungssegmente nicht auf einer Ebene mit der Schwenkachse liegen müssen. Vielmehr ist davon auszugehen, dass sich die Schwenkachse auf der vom Arbeitsraum wegweisenden Seite der Schutzabdeckungssegmente befindet.

In einer weiteren besonders vorteilhaften Ausführungsform einer erfindungsgemäßen Schutzabdeckung wird die Schwenkachse senkrecht zur Führungsebene ausgerichtet. Entsprechend steht die Schwenkachse sowohl senkrecht zur Führungsrichtung als auch senkrecht zur Bewegungsrichtung unabhängig von der Stellung der Schutzabdeckungsführung, d.h. unabhängig davon, ob sich die Schutzabdeckungsführung in der Nutzstellung oder der Freigabestellung befindet. Sofern in der Nutzstellung die Bewegungsrichtung mit der Führungsrichtung übereinstimmt, so entspricht der Schwenkwinkel, um den die Schutzabdeckungsführung zwischen der Nutzstellung und der Freigabestellung schwenkbar ist, dem Winkel zwischen der Führungsrichtung und der Bewegungsrichtung in der Freigabestellung.

In dieser vorteilhaften Ausführungsform führt das Schwenken der Schutzabdeckungsführung bei Anordnung der Schwenkachse nahe oder bei dem beweglichen Maschinenteil, d.h. auf der Seite des vorderen Schutzabdeckungssegments, in naheliegender Weise beim Schwenken von der Nutzstellung in die Freigabestellung zu einem Hochschwenken des letzten Schutzabdeckungssegments. Demgegenüber wird bei einem Hochschwenken das vordere Schutzabdeckungssegment in geringerem Maße verlagert.

Hinsichtlich der Anordnung der Schwenkachse in Relation zur Schutzabdeckungsführung stehen ebenso in dieser Ausführung verschiedene Möglichkeiten zur Verfügung. Denkbar wäre es, die Schwenkachse exakt an derjenigen Stelle zu positionieren, an der das vordere Schutzabdeckungssegment am bewegten Maschinenteil anschließt. Dies würde zu einer reinen Drehbewegung zwischen dem vorderen Schutzabdeckungssegment und dem bewegten Maschinenteil beim Schwenken von der Nutzstellung in die Freigabestellung führen. Hierzu müsste jedoch eine exakt definierte Stellung des bewegten Maschinenteils in der Führungsrichtung festgelegt werden und es muss sichergestellt sein, dass beim Schwenken der Schutzabdeckung das bewegte Maschinenteil sich in der definierten Stellung befindet.

Weiterhin wäre es denkbar, die Schwenkachse zwischen dem bewegten Maschinenteil und dem fernen Ende der Schutzabdeckungsführung anzuordnen. Hierbei würde ein Hochschwenken der Schutzabdeckungsführung mit seinem letzten Schutzabdeckungssegment zu einem Herunterschwenken des vorderen Schutzabdeckungssegments führen, wobei sich ein Abstand zwischen dem vorderen Schutzabdeckungssegment und dem bewegten Maschinenteil bilden würde.

Hinsichtlich der Lagerung der Schutzabdeckung und der betrachteten Schwenkbewegung ist es jedoch besonders vorteilhaft, wenn sich das vordere Schutzabdeckungssegment zwischen den weiteren Schutzabdeckungssegmenten und der Schwenkachse befindet. In diesem Fall führt ein Schwenken der Schutzabdeckungsführung von der Nutzstellung in die Freigabestellung zu einer gleichgerichteten Schwenkbewegung sämtlicher Schutzabdeckungssegmente, so dass kein Drehen der Schutzabdeckung um die Schwenkachse sondern vielmehr ein gesamtes Schwenken der gesamten Schutzabdeckung um die Schwenkachse erfolgt.

In der vorteilhaften Positionierung der Schwenkachse führt das Schwenken der Schutzabdeckungsführung im Regelfall ebenso zu einer Veränderung der relativen Position des vorderen Schutzabdeckungssegments relativ zum bewegten Maschinenteil, so dass es besonders vorteilhaft ist, wenn das vordere Schutzabdeckungssegment weiterhin an einer Linearführung verschiebbar gelagert ist, wobei die Linearführung wiederum am bewegten Maschinenteil anbaubar ist. Die Linearführung ist hierzu in einer Verfahrrichtung auszurichten, welche quer zur Führungsrichtung und quer zur Schwenkachse auszurichten ist. Sofern die Führungsrichtung sowie rechtwinklig hierzu die Schwenkachse horizontal verlaufen, ist entsprechend die Verfahrrichtung vertikal auszurichten. Geringe Winkelabweichungen sind hierbei unerheblich, sofern beim Schwenken der Schutzabdeckungsführung mit einer relativen Verlagerung des vorderen Schutzabdeckungssegments relativ zum bewegten Maschinenteil die Anbindung und Lagerung des vorderen Schutzabdeckungssegments am bewegten Maschinenteil gesichert ist.

Weiterhin betrifft die Erfindung eine Schutzabdeckungsanordnung mit zumindest einer ersten Schutzabdeckung, bei der die Schwenkachse in einer ersten Führungsrichtung übereinstimmend einer ersten Bewegungsrichtung - wie zuvor beschrieben - ausgerichtet ist. Hierbei umfasst die erfindungsgemäße Schutzabdeckungsanordnung weiterhin eine zweite Schutzabdeckung, bei der die Schwenkachse senkrecht zur zweiten Führungsebene - wie zuvor beschrieben - ausgerichtet ist, wobei die Schwenkachse der ersten Schutzabdeckung identisch mit der Schwenkachse der zweiten Schutzabdeckung ist.

Dies führt zu einer Ausführungsform, bei der die erste Schutzabdeckung die Bewegung des bewegten Maschinenteils in einer ersten Führungsrichtung durch ein Auseinanderziehen und ein Zusammenziehen deren erster Schutzabdeckungssegmente ausgleicht, wobei die zweite Schutzabdeckung die Bewegung des bewegten Maschinenteils mit einem Auseinanderziehen bzw. Zusammenschieben deren zweiter Schutzabdeckungssegmente ausgleicht. In dieser erfindungsgemäßen Ausführungsform einer Schutzabdeckungsanordnung mit einer ersten Schutzabdeckung und einer zweiten Schutzabdeckung erfolgt ein gemeinsames Schwenken der ersten Schutzabdeckung und der zweiten Schutzabdeckung um die gemeinsame Schwenkachse von der Nutzstellung in die Freigabestellung. Mit der erfindungsgemäßen Schutzabdeckungsanordnung ist es möglich, zwei verschiedene Bewegungsräume des bewegten Maschinenteils zu realisieren und dennoch die Freigabe des erforderlichen Bereichs über dem Arbeitsraum zur Kranbeladung zu ermöglichen.

Bei dieser Ausführungsform der Schutzabdeckungsanordnung mit einer ersten Schutzabdeckung und einer zweiten Schutzabdeckung ist es besonders vorteilhaft, wenn eine erste Abdeckfläche der ersten Schutzabdeckung zumindest parallel zu einer zweiten Abdeckfläche der zweiten Schutzabdeckung angeordnet ist. Somit wird eine einheitliche Abdeckung des Arbeitsraums gegenüber dem Luftraum mit den sich in Nutzstellung befindlichen Schutzabdeckungen erzielt. Besonders vorteilhaft ist es hierbei, wenn die erste Abdeckfläche im Wesentlichen mit der zweiten Abdeckfläche übereinstimmend angeordnet ist. Naheliegend ist es, dass die erste Abdeckfläche nicht identisch der zweiten Abdeckfläche sein muss, insbesondere wenn man berücksichtigt, dass die teleskopartige Zusammenführung von L-förmigen Schutzabdeckungssegmenten zu einer geringfügigen Veränderung der Lage der sich jeweils bildenden Abdeckfläche führt.

Weiterhin ist es besonders vorteilhaft, wenn bei Realisierung einer Schutzabdeckungsanordnung mit zwei quer zueinander beweglichen Schutzabdeckungen die zweite Schutzabdeckungsführung seinerseits mit einem vom bewegten Maschinenteil fernen Ende an der ersten Schutzabdeckungsführung bzw. an einer von zwei Führungsschienen in der ersten Führungsrichtung verschiebbar gelagert ist. In diesem Ausführungsfall führt eine Veränderung der Lage des bewegten Maschinenteils mit einem Zusammenschieben bzw. Auseinanderziehen der Schutzabdeckungssegmente der ersten Schutzabdeckung zugleich zu einer Veränderung der Lage der zweiten Schutzabdeckung.

Eine weitere erfindungsgemäße Schutzabdeckungsanordnung wird realisiert, indem wiederum zunächst einmal eine erste Schutzabdeckung eingesetzt wird, bei der die Schwenkachse in der Führungsrichtung - wie zuvor beschrieben - ausgerichtet ist. Weiterhin umfasst die alternative Schutzabdeckungsanordnung eine dritte Schutzabdeckung, die wiederum eine dritte Schutzabdeckungsführung sowie eine Mehrzahl dritter Schutzabdeckungssegmente umfasst. Die dritte Schutzabdeckungsführung ist in diesem Falle in der ersten Führungsrichtung ausgerichtet, wobei die dritten Schutzabdeckungssegmente analog jeweils zumindest einen an der dritten Schutzabdeckungsführung gelagerten Stützrahmen und zumindest ein Abdeckelement umfassen. Entsprechend sind diese ebenso wie die ersten Schutzabdeckungssegmente in der Führungsrichtung gegeneinander verschiebbar, wobei des Weiteren ein vorderes Schutzabdeckungssegment der dritten Schutzabdeckung am beweglichen Maschinenteil anordenbar ist und ein hinteres Schutzabdeckungssegment der dritten Schutzabdeckung an einem vom bewegten Maschinenteil fernen Ende der dritten Schutzabdeckungsführung befestigt ist. Im Regelfall führt dies zu einer Anordnung, bei der die vorderen Schutzabdeckungssegmente sowie die letzten Schutzabdeckungssegmente der ersten Schutzabdeckung und der dritten Schutzabdeckung in Führungsrichtung betrachtet auf gleicher Höhe angeordnet sind.

Wesentlich für die Betrachtung dieser erfindungsgemäßen Schutzabdeckungsanordnung ist es, dass in der Nutzstellung eine von der ersten Schutzabdeckung gebildete erste Abdeckfläche in einem Winkel von ungefähr 90° zu einer von der dritten Schutzabdeckung gebildeten dritten Abdeckungsfläche ausgerichtet ist, wobei entsprechend die erste Schutzabdeckung über Eck mit der zweiten Schutzabdeckung angeordnet ist. In aller Regel erfolgt eine rechtwinklige Anordnung der beiden Schutzabdeckungen zueinander, wobei es unerheblich ist, ob die Abdeckflächen zueinander in einem Winkel von 90° ± 30° angeordnet sind.

In dieser Ausführungsvariante einer erfindungsgemäßen Schutzabdeckungsanordnung mit über Eck angeordneten Schutzabdeckungen, wobei die erste Schutzabdeckung mit einer schwenkbaren Schutzabdeckungsführung versehen ist, kann eine Abtrennung des Arbeitsraums einer Maschine sowohl zu einer Rückseite als auch gegenüber einem sich darüber befindenden Luftraum erfolgen, wobei zudem die Beladung eines Maschinentisches mit einem Kran durch das Schwenken der ersten Schutzabdeckung ermöglicht ist.

Bei einer Verwendung von Abdeckungsverlängerungen ist es besonders vorteilhaft, wenn die ersten Abdeckungsverlängerungen der ersten Schutzabdeckungssegmente die dritten Abdeckungsverlängerungen der dritten Schutzabdeckungssegmente überlappen. Bei Verwendung der ersten Schutzabdeckung zur Abtrennung des Arbeitsraums von dem sich darüber befindlichen Luftraum sowie bei Verwendung der dritten Schutzabdeckung zur Abdeckung der Rückseite des Arbeitsraums ist es weiterhin vorteilhaft, wenn die erste Abdeckungsverlängerung sich auf der zum Arbeitsraum weisenden Seite vor der dritten Abdeckungsverlängerung befindet.

Zur Gewährleistung einer freien Schwenkbarkeit der ersten Schutzabdeckung zwischen der Nutzstellung und der Freigabestellung unabhängig von der Position des bewegten Maschinenteils ist es weiterhin besonders vorteilhaft, wenn - insbesondere bei der Verwendung von Abdeckungsverlängerungen - die teleskopartig verschiebbaren Abdeckschenkel der ersten Schutzabdeckungssegmente und der dritten Schutzabdeckungssegmente entgegen gesetzt ausgerichtet sind.

Zur Realisierung eines möglichst geschlossenen Arbeitsraums mit der ersten Schutzabdeckung und der dritten Schutzabdeckung ist es weiterhin besonders vorteilhaft, wenn zumindest bei einem Teil der Schutzabdeckungssegmente das Abdeckelement des ersten Schutzabdeckungssegments mit dem Abdeckelement des dritten Schutzabdeckungssegments über ein zumindest bereichsweise flexibles Eckabdeckelement verbunden ist. Durch die Verbindung der Abdeckelemente mit einem bereichsweise flexiblen Eckabdeckelement kann eine geschlossene Hülle im Bereich zwischen der Rückwand eines Arbeitsraums und dem sich darüber befindlichen Bereich realisiert werden. Hierdurch kann insbesondere vermieden werden, dass bei einer Rauchentwicklung ein Entweichen im Eckbereich zwischen erster Schutzabdeckung und zweiter Schutzabdeckung erfolgt.

Bei Verwendung einer ersten Schutzabdeckung, welche zumindest als Abdeckelement einen Faltenbalgabschnitt umfasst, sowie bei Verwendung einer dritten Schutzabdeckung, welche ebenso zumindest als ein Abdeckelement der jeweiligen Schutzabdeckungssegmente einen Faltenbalgabschnitt aufweist, ist es besonders vorteilhaft, wenn der Faltenbalgabschnitt des ersten Schutzabdeckungssegments mit dem Faltenbalgabschnitt des dritten Schutzabdeckungssegments über ein Eckfaltenbalgabschnitt als Eckabdeckelement in Art eines Faltenbalgs verbunden ist. Hierbei ist zu berücksichtigen, dass der Eckfaltenbalgabschnitt entsprechend flexible ausgeführt ist, so dass bei einem Hochschwenken der ersten Schutzabdeckungssegmente bei einer unveränderten Lage der dritten Schutzabdeckungssegmente eine entsprechende Verformung des Eckfaltenbalgabschnitts gewährleistet werden kann.

Diesbezüglich ist es unerheblich, ob der jeweilige Faltenbalgabschnitt des ersten Schutzabdeckungssegments und/oder der Faltenbalgabschnitt des dritten Schutzabdeckungssegments von einem insgesamt flexiblen Material realisiert werden, oder ob diese lediglich bereichsweise flexibel sind. Zumindest ist es vorteilhaft, wenn der Eckfaltenbalgabschnitt insgesamt flexibel ausgeführt ist, so dass dieses sowohl die Bewegung des bewegten Maschinenteils in der Führungsrichtung als auch das Schwenken der ersten Schutzabdeckung zwischen der Nutzstellung und der Freigabestellung ermöglicht.

Die Verbindung der beiden Faltenbalgabschnitte des ersten Schutzabdeckungssegments und des zweiten Schutzabdeckungssegments kann auf unterschiedliche Weise erfolgen. In einer ersten Ausführung werden diese hierzu bei insgesamt flexiblen Faltenbalgabschnitten bis in die Ecke verlängert und dort auf Gehrung miteinander verbunden.

Analog ist es möglich, insbesondere bei beispielsweise steifen mit Filmscharnier versehenen Faltenbalgabschnitten, die Faltenbalgabschnitte um jeweils einen Eckabschnitt aus einem flexiblen Balgmaterial zu verlängern, welche wie zuvor im Eck auf Gehrung miteinander verbunden werden.

Gleichfalls ist es möglich, ein aus einem flexiblen Balgmaterial gebildeten Eckfaltenbalgabschnitt zu realisieren, welcher beidseitig am jeweiligen Faltenbalgabschnitt befestigt wird, wobei der Eckfaltenbalgabschnitt sowohl mit einer Gehrung ausgeführt als auch ebenso aus einem flächigen Material entsprechend gefaltet sein kann.

Wie eine Verbindung zweiter Eckabschnitte aneinander und/oder wie eine Verbindung zwischen einem Eckabschnitt und dem jeweiligen Faltenbalgabschnitt und/oder wie ein Eckfaltenbalgabschnitt an die beiden Faltenbalgabschnitte erfolgt, ist zunächst unerheblich. Insofern ist es möglich, diese mechanisch, beispielsweise durch Vernähen oder Klemmen, oder durch Verschweißen oder durch Verkleben miteinander zu verbinden.

Weiterhin ist es naheliegend, dass der jeweilige Eckfaltenbalgabschnitt sowohl einzeln ausgebildet als auch ebenso von einem Balgmaterial über alle Schutzabdeckungssegmente ausgeführt sein kann.

Es ist naheliegend, dass ausgehend von den beiden zuvor beschriebenen erfindungsgemäßen Schutzabdeckungsanordnungen eine Ausführung besonders vorteilhaft ist, bei der zumindest eine erste Schutzabdeckung, bei der die Schwenkachse in Führungsrichtung ausgerichtet ist, eine zweite Schutzabdeckung, bei der die Schwenkachse senkrecht zur Führungsebene ausgerichtet ist, und des Weiteren eine dritte Schutzabdeckung eingesetzt wird, welche über Eck zur ersten Schutzabdeckung angeordnet ist und bei der die Führungsrichtung entsprechend mit der Führungsrichtung der ersten Schutzabdeckung übereinstimmt.

Darüber hinaus ist es besonders vorteilhaft, wenn beidseitig des bewegten Maschinenteils erste und/oder dritte Schutzabdeckungen eingesetzt werden.

Hierbei kann in vorteilhafter Weise eine über das bewegte Maschinenteil symmetrische Anordnung vorgenommen werden.

In den nachfolgenden Figuren werden beispielhafte Ausführungsformen einer Schutzabdeckung bzw. einer Schutzabdeckungsanordnung skizziert.

Die Figuren zeigen:

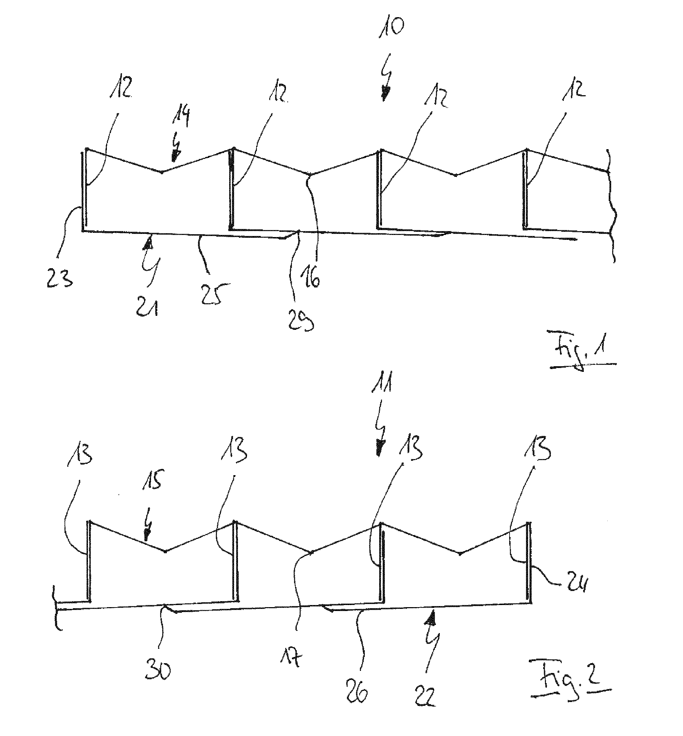

- Fig. 1: in schematischer Darstellung einen Querschnitt durch einen Dachbalg nach einem Ausführungsbeispiel der vorliegenden Erfindung;
- Fig. 2: in schematischer Darstellung einen Querschnitt durch einen Rückbalg nach dem Ausführungsbeispiel von Fig. 2;

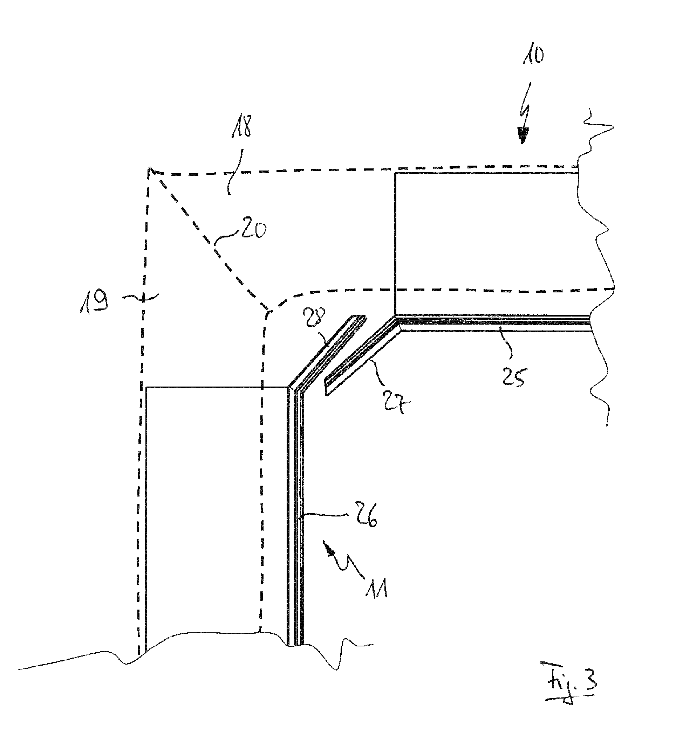

- Fig. 3: in schematischer vergrößerter Darstellung den Eckbereich des Ausführungsbeispiels nach den Fig. 1 und 2 in Nutzstellung der Schutzabdeckung;

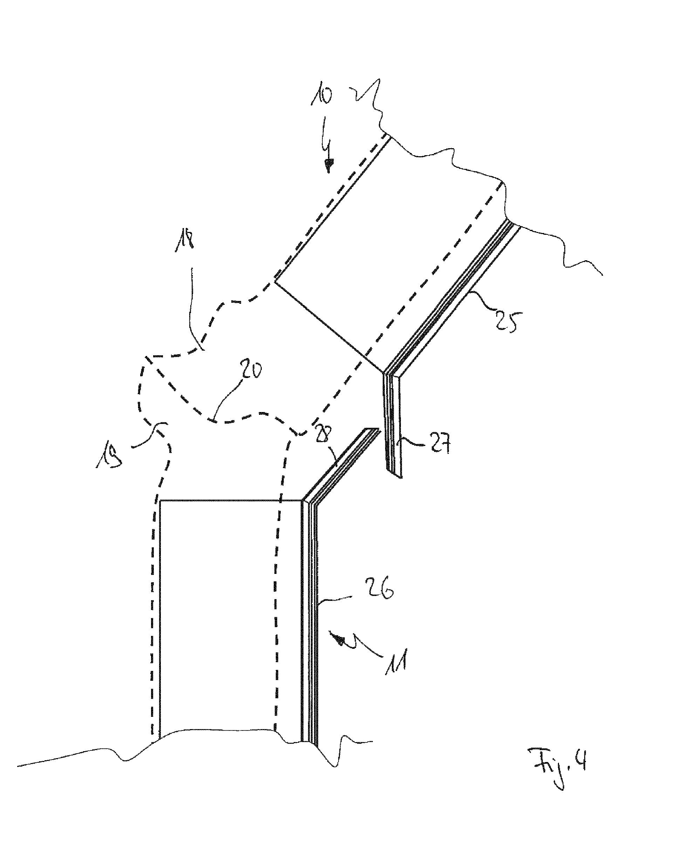

- Fig. 4: in einer der Fig. 3 entsprechenden Darstellung den Eckbereich in teilweise nach oben verschwenkter Freigabestellung des Dachbalges;

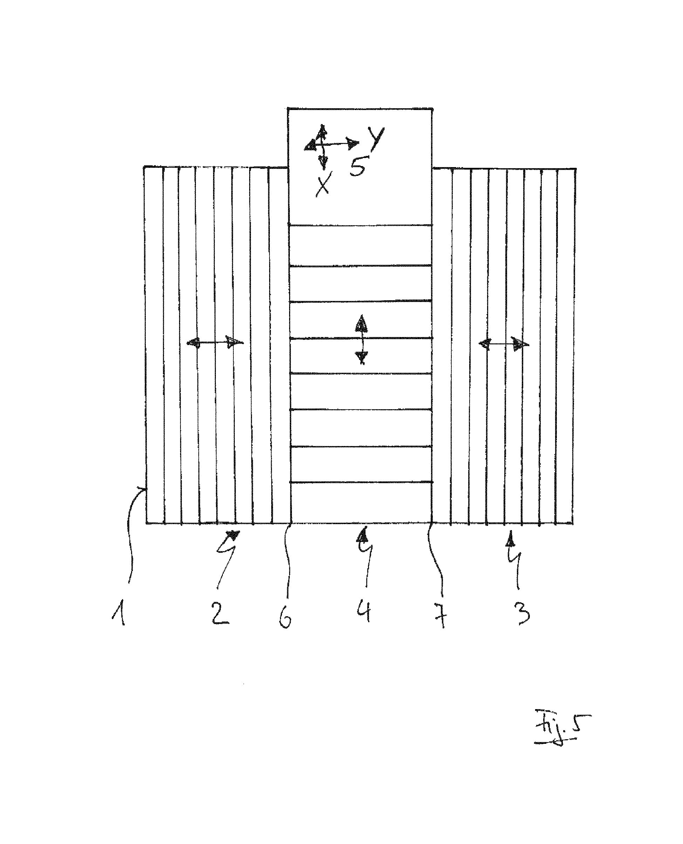

- Fig. 5: in höchst schematischer Darstellung eine Dachbalganordnung eines weiteren Ausführungsbeispiels der Erfindung; und

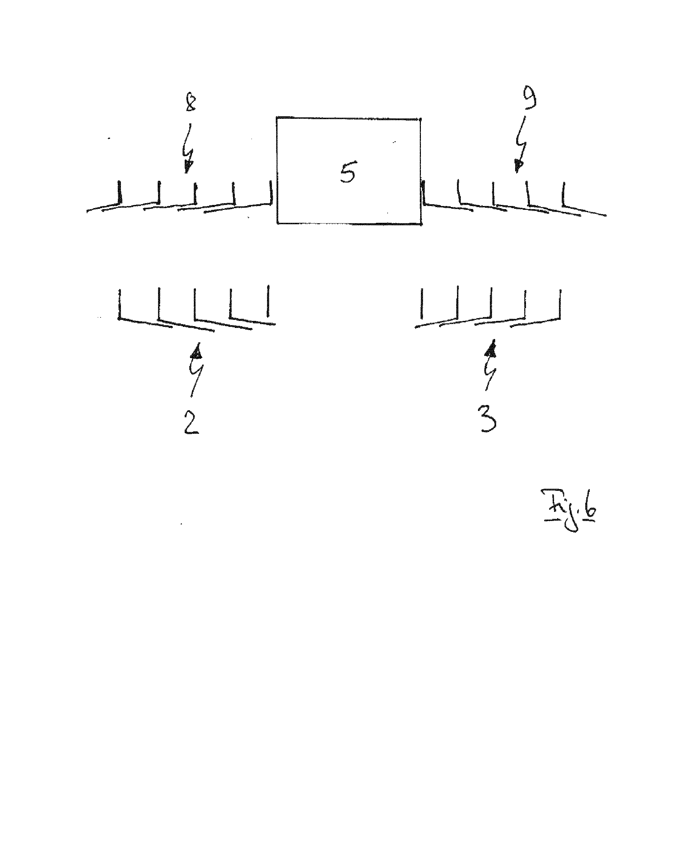

- Fig. 6: in prinzipienhafter Skizze die Orientierung der Teleskopbleche der Dach- und Rückbälge des Ausführungsbeispiels nach Fig. 5.

Die Figuren zeigen ein Ausführungsbeispiel einer Schutzabdeckungsanordnung, insbesondere zur Abdeckung beweglicher Teile an Werkzeugmaschinen, mit mindestens einem Dachbalg als beispielhafte erste Schutzabdeckung und mindestens einem dazu winklig, insbesondere rechtwinklig, angeordneten Rückbalg als dritte Schutzabdeckung. Entsprechend ist die beispielhafte Schutzabdeckungsanordnung also L-förmig ausgeführt mit einer ersten Schutzabdeckung in Form eines Dachbalges 10, der den abzudeckenden Bereich beispielsweise einer Werkzeugmaschine nach oben abdeckt, und einer dritten Schutzabdeckung in Form eines Rückbalgs 11, der den abzudeckenden Bereich seitlich, insbesondere nach hinten, abdeckt.

Jeder der beiden Schutzabdeckungen 10, 11 weist eine Mehrzahl von Stützrahmen 12, 13 auf, die jeweils durch Faltenbalgabschnitte 14, 15 miteinander verbunden sind. Dabei können die Faltenbalgabschnitte 14, 15 jeweils separat ausgeführt und an den jeweiligen Stützrahmen 12, 13 befestigt sein oder aber als einstückiger Faltenbalg, der sämtliche Stützrahmen 12, 13 übergreifend an diesen befestigt ist. Zwischen jeweils zwei Stützrahmen 12, 13 weist jeder Faltenbalgabschnitt 14, 15 dieses Ausführungsbeispiels mindestens einen Faltengrund 16, 17 auf, um den eine Faltung oder Streckung des Balgmaterials beim Zusammenfahren oder Auseinanderfahren der Schutzabdeckung 10, 11 erfolgt.

Das Balgmaterial kann in grundsätzlich beliebiger Weise als textiles Material ausgebildet sein oder aber als folienartiges Kunststoffmaterial, bei dem der Faltengrund 16, 17 folienscharnierartig ausgebildet ist.

Im Bereich der durch die beiden Faltenbalgabschnitte 14, 15 gebildeten Ecke sind diese flexibel über ein Eckabdeckelement miteinander verbunden. Dazu ist im Falle eines textilen Balgmaterials dieses bei beiden Faltenbalgabschnitten 14, 15 im Bereich der Ecke mit einem Eckabschnitt 18, 19 über die Stützrahmen axial überstehend ausgebildet, wobei die Eckabschnitte 18, 19 beider Faltenbalgabschnitte 14, 15 miteinander verbunden, insbesondere verklebt, verschweißt oder vernäht, sind. Dabei können diese beiden Balgmaterialien der Eckabschnitte 18, 19 auf Gehrung 20 versteppt sein, so dass sich auch im Eckbereich eine durchgehend geschlossene Schutzabdeckung ergibt.

Im Falle eines vergleichsweise eigensteifen Balgmaterials aus Kunststoff kann an den zur Ecke weisenden Enden der Stützrahmen 12, 13 beispielsweise des Dachbalges 10 ein flexibler textiler balgartiger Eckabschnitt befestigt sein, der mit einem ebensolchen des Rückbalges 11 in der vorbeschriebenen Weise flexibel verbunden werden kann. Ebenso ist es möglich, ein flexibles balgartiges Eckabdeckelement über Eck mit den beiden Faltenbalgabschnitten 14, 15 zu verbinden.

Durch diese flexible Verbindung zwischen dem Dachbalg 10 und dem Rückbalg 11 kann in einfacher Weise unter Verformung des flexiblen Eckabdeckelements der Dachbalg 10 angehoben bzw. um diese Eckverbindung verschwenkt werden, so dass in einfacher Weise eine Öffnung der Schutzabdeckungsanordnung erfolgen kann, so dass beispielsweise mittels eines Krans von oben ein Werkstück in den Bearbeitungsbereich einer Werkzeugmaschine eingebracht und von dort wieder entnommen werden kann. Dieses Verschwenken wird insbesondere dann erleichtert, wenn zumindest der Dachbalg 10 an einem Träger oder Rahmen 01 angeordnet ist, der dann über ein scharnierartiges Schwenkgelenk gegenüber dem Rückbalg 11 verschwenkbar ist. Die Verschwenkung kann dabei manuell oder aber über einen insbesondere elektrischen Schwenkantrieb erfolgen.

An den Stützrahmen 12, 13 können in für sich bekannter Weise Teleskopbleche 21, 22 angeordnet sein, um insbesondere die Durchschlagsfestigkeit der Schutzabdeckung 10, 11 und damit deren Sicherheit zu erhöhen. Diese Teleskopbleche 21, 22 weisen im Querschnitt eine im wesentlichen L-förmige Gestalt auf und sind mit ihrem ersten Schenkel 23, 24 in beliebiger Weise an den Stützrahmen 12, 13 befestigt, beispielsweise angeschraubt, angenietet oder angeclipst. Die Abdeckschenkel 25, 26 der Teleskopbleche 21, 22 sind dazu im Wesentlichen rechtwinklig ausgebildet, so dass diese Abdeckschenkel 25, 26 benachbarter Teleskopbleche 21, 22 einander teleskopartig übergreifen und so eine geschlossene Schutzabdeckung bilden. Dabei können sowohl am Dachbalg 10 als auch am Rückbalg 11 derartige Teleskopbleche 21, 22 angeordnet sein.

Nach einer weiteren Gestaltung können die ersten Schenkel der L-förmigen Teleskopbleche 21, 22 gleichzeitig zur Befestigung der Balgabschnitte dienen, so dass auf separate Stützrahmen 12, 13 verzichtet werden kann, bzw. die Stützrahmen 12, 13 den ersten Schenkel 23, 24 der Teleskopbleche 21, 22 bilden.

Um auch im Bereich der Ecke zwischen dem Dachbalg 10 und dem Rückbalg 11 eine hohe Sicherheit zu gewährleisten, können die Teleskopbleche 21, 22 entweder des Dachbalges 10 und/oder des Rückbalges 11 am Abdeckschenkel 25, 26 eine laschenartig abgekantete Abdeckungsverlängerung 27, 28 aufweisen, die die Ecke übergreift und abdeckt. Eine besonders hohe Sicherheit ergibt sich, wenn die Teleskopbleche 21, 22 von Dachbalg 10 und Rückbalg 11 derartig abgekantete laschenartige Abdeckungsverlängerungen 27, 28 aufweisen, die einander jeweils hintergreifen. Bei einer rechtwinkligen Anordnung von Dachbalg 10 und Rückbalg 11 können dann die laschenartigen Abdeckungsverlängerungen 27, 28 um jeweils 45° gegenüber der durch den Abdeckschenkel 25, 26 gebildeten Abdeckungsebene abgewinkelt sein. Wenn neben der Durchschlagfestigkeit keine weitere Abdichtung erforderlich ist, kann bei der Anordnung von laschenartigen Abdeckungsverlängerungen 27, 28 auch auf die flexible Verbindung der Schutzabdeckungssegmente durch ein Eckabdeckelement als textiles Balgelement im Eckbereich verzichtet werden.

Um ein sicheres Öffnen der Schutzabdeckungsanordnung durch Verschwenkung des Dachbalgs 10 auch bei der Verwendung von Teleskopblechen 21, 22 zu gewährleisten, sind die Teleskopbleche 21, 22 am Dachbalg 10 und am Rückbalg 11 in unterschiedlicher Orientierung angeordnet. Dies bedeutet, dass die freie Längskante 29, 30 der Abdeckschenkel 25, 26 der Teleskopbleche 21, 22, also die Längskante, die vom ersten Schenkel 23, 24 weg weist, beim Dachbalg 10 in eine Richtung und beim Rückbalg 11 in die entgegen gesetzte Richtung weist. Da dies zwangsläufig auch die Orientierung und Anordnung der angeformten abgewinkelten laschenartigen Abdeckungsverlängerungen 27, 28 bestimmt, reduziert sich die Gefahr, dass diese sich beim Hochschwenken des Dachbalgs 10 gegenseitig hemmen.

Die vorbeschriebenen Schutzabdeckungen 10, 11 sind zum Verfahren in einer Achsrichtung X übereinstimmend mit der Schwenkachse bestimmt. Falls ein Verfahren des beweglichen Maschinenteils in zwei Achsrichtungen X und Y möglich sein soll, kann insbesondere eine Schutzabdeckungsanordnung ausgebildet sein wie folgt:
In einem Rahmen 01 sind ein linker Dachbalg 02 und ein rechter Dachbalg 03 angeordnet, die jeweils einem Dachbalg 10 entsprechen, wie er vorstehend erläutert worden ist. Diese beiden Dachbälge 02, 03 sind jeweils über flexible Eckabdeckelemente, welche von einem flexiblen Balgmaterial gebildet werden, mit einem Rückbalg 11 verbunden, wie er ebenfalls vorstehend beschrieben worden ist. Auch der Rückbalg kann zweiteilig ausgebildet sein, so dass jeder Dachbalg 02, 03 der Schutzabdeckungsanordnung einem Rückbalg 11 der Rückbalganordnung entspricht. Wie vorstehend beschrieben, kann die Schutzabdeckungsanordnung manuell oder über einen Antrieb angehoben bzw. verschwenkt werden, so dass der unter der Schutzabdeckungsanordnung befindliche Raum zugänglich ist. Dazu kann der Rahmen 01 der Schutzabdeckungsanordnung über eine Schenklagerung mittelbar oder unmittelbar am Rahmen, beispielsweise einer Werkzeugmaschine, angelenkt sein.

Die beiden Dachbälge 02, 03 sind am Rahmen 01 mit Abstand zueinander angeordnet, der durch zwei Führungsschienen 06, 07 der zweiten Schutzabdeckungsführung definiert wird, die sich in der Bewegungsrichtung des dritten Dachbalgs 04 als zweite Schutzabdeckung erstrecken. Entsprechend entspricht die Bewegungsrichtung des dritten Dachbalgs der Längsachse der Stützrahmen bzw. der Teleskopbleche der beiden neben liegenden Dachbälge 02, 03. Im zwischen den beiden Dachbälgen 02 und 03 gebildeten Fenster ist der dritter Dachbalg 04 als zweite Schutzabdeckung angeordnet, der in seinem grundsätzlichen Aufbau den beiden ersten Dachbälgen 02, 03 entspricht. Die einzelnen Segmente dieses dritten Dachbalges 04, gebildet durch Stützrahmen und/oder Teleskopbleche, sind jedoch senkrecht zu den beiden ersten Dachbälgen 02, 03 angeordnet, so dass der dritte Dachbalg 04 auf den beiden Schienen 06, 07 quer zu den beiden ersten Dachbälgen 02, 03 verfahrbar ist. Beim Hochklappen bzw. Verschwenken der Schutzabdeckungsanordnung insgesamt wird auch der dritte Dachbalg 04 mit verschwenkt, wobei, falls dies notwendig sein sollte, gleichzeitig dieser dritte Dachbalg 04 axial, das heißt in seiner Bewegungsrichtung verschoben werden kann. Diese Verschiebung kann dabei aktiv durch einen eigenen Antrieb erfolgen oder aber passiv, durch Anbindung der Stirnseite des dritten Dachbalgs 04 mit einem vorderen Schutzabdeckungssegment am bewegten Maschinenteil der abzudeckenden Werkzeugmaschine, beispielsweise einer in X-Y-Richtung verfahrbaren Vertikalspindelanordnung 05, wobei dann durch geometrische Verkürzung des Abstandes zu diesem bewegten Maschinenteil 05 beim Hochklappen der dritte Dachbalg 04 zusammengeschoben und beim Herunterklappen wieder auseinandergezogen wird.

Die Orientierung der Teleskopbleche an den Dachbälgen 02, 03 und am Rückbalg ist wiederum entgegengesetzt, so dass sich auch bei Verwendung von laschenartig angeformten Abdeckungsverlängerungen der Teleskopbleche keine Störung oder Hemmung des Verschwenkens ergibt. Falls sowohl die Abdeckungsanordnung mit den drei Dachbälgen 02, 03, 04 als auch die Rückbalganordnung so ausgeführt ist, dass zwei erste Dachbälge 02 und 03 und zwei Rückbälge 08 und 09 vorgesehen sind, kann die Orientierung der Teleskopbleche der beiden Dachbalg/Rückbalg-Paarungen spiegelsymmetrisch sein.

### Bezugszeichenliste

- 01: Rahmen
- 02: Erste Schutzabdeckung als linker Dachbalg
- 03: Erste Schutzabdeckung als rechter Dachbalg
- 04: Zweite Schutzabdeckung als mittlerer Dachbalg
- 05: Bewegtes Maschinenteil als Vertikalspindelanordnung
- 06: Linke Führungsschiene der ersten Schutzabdeckungsführung
- 07: Rechte Führungsschiene der ersten Schutzabdeckungsführung
- 08: Dritte Schutzabdeckung, linker Rückbalg
- 09: Dritte Schutzabdeckung, rechter Rückbalg
- 10: Erste Schutzabdeckung, Dachbalg
- 11: Dritte Schutzabdeckung, Rückbalg
- 12: Stützrahmen der ersten Schutzabdeckung
- 13: Stützrahmen der dritten Schutzabdeckung
- 14: Faltenbalgabschnitt der ersten Schutzabdeckung
- 15: Faltenbalgabschnitt der dritten Schutzabdeckung
- 16: Faltengrund des ersten Faltenbalgabschnitts
- 17: Faltengrund des dritten Faltenbalgabschnitts
- 18: Eckabschnitt des Eckabdeckelements in Verlängerung des ersten Faltenbalgabschnitts
- 19: Eckabschnitt des Eckabdeckelements in Verlängerung des dritten Faltenbalgabschnitts
- 20: Gehrung im Eckabdeckelement
- 21: Erstes Schutzabdeckungssegment als Teleskopblech
- 22: Drittes Schutzabdeckungssegment als Teleskopblech
- 23: Erster Schenkel des ersten Teleskopblechs
- 24: Erster Schenkel des zweiten Teleskopblechs
- 25: Abdeckschenkel des ersten Schutzabdeckungssegments
- 26: Abdeckschenkel des dritten Schutzabdeckungssegments
- 27: Laschenartige Abdeckungsverlängerung des ersten Schutzabdeckungssegments
- 28: Laschenartige Abdeckungsverlängerung des dritten Schutzabdeckungssegments
- 29: Freie Längskante des ersten Abdeckschenkels
- 30: Freie Längskante des zweiten Abdeckschenkels

## Patentansprüche

1. Schutzabdeckung, insbesondere zur Abtrennung eines Arbeitsraums einer Maschine von dem sich darüber befindlichen Luftraum, mit einer Schutzabdeckungsführung, welche in einer Bewegungsrichtung ausgerichtet ist, und mit einer Mehrzahl Schutzabdeckungssegmenten, welche jeweils zumindest einen an der Schutzabdeckungsführung gelagerten Stützrahmen und zumindest ein Abdeckelement umfassen und in der Bewegungsrichtung gegeneinander verschiebbar sind, wobei ein vorderes Schutzabdeckungssegment an einem in einer Führungsrichtung beweglichen Maschinenteil anordnenbar ist und ein hinteres Schutzabdeckungssegment an einem von dem bewegten Maschinenteil fernen Ende der Schutzabdeckungsführung befestigt ist, wobei zumindest die Bewegungsrichtung und die Führungsrichtung in einer gemeinsamen Führungsebene angeordnet sind,
**dadurch gekennzeichnet,**
**dass** die Schutzabdeckungsführung um einen Schwenkwinkel in einer Schwenklagerung um eine Schwenkachse zwischen einer Nutzstellung und einer Freigabestellung schwenkbar gelagert ist.

2. Schutzabdeckung nach Anspruch 1,
**dadurch gekennzeichnet,**
**dass** das Schutzabdeckungssegment L-förmig ausgeführt ist und den Stützrahmen und ein Abdeckschenkel als Abdeckelement umfasst, wobei jeweils die Abdeckschenkel benachbarter Schutzabdeckungssegmente aufeinander zur Anlage gelangen.

3. Schutzabdeckung nach Anspruch 1 oder 2,
**dadurch gekennzeichnet,**
**dass** das Abdeckelement jeweils von einem Faltenbalgabschnitt gebildet wird, welcher zumindest bereichsweise flexibel ausgeführt und an benachbarten Stützrahmen befestigt ist.

4. Schutzabdeckung nach einem der Ansprüche 1 bis 3,
**dadurch gekennzeichnet,**
**dass** die Schutzabdeckungsführung von einem Schwenkantrieb von der Nutzstellung in die Freigabestellung geschwenkt werden kann.

5. Schutzabdeckung nach einem der Ansprüche 1 bis 4,
**dadurch gekennzeichnet,**
**dass** der Schwenkwinkel zumindest 45°, insbesondere zumindest 60°, beträgt.

6. Schutzabdeckung nach einem der Ansprüche 1 bis 5,
**dadurch gekennzeichnet,**
**dass** die Schwenkachse in der Führungsrichtung ausgerichtet ist.

7. Schutzabdeckung nach Anspruch 6,
**dadurch gekennzeichnet,**
**dass** das Schutzabdeckungssegment auf der zur Schwenkachse weisenden Seite in Verlängerung des Abdeckelements eine Abdeckungsverlängerung aufweist, welche zum Arbeitsraum hin abgewinkelt einen neben der Schutzabdeckung liegenden Eckbereich zumindest in der Nutzstellung abdeckt.

8. Schutzabdeckung nach einem der Ansprüche 1 bis 5,
**dadurch gekennzeichnet,**
**dass** die Schwenkachse senkrecht zur Führungsebene ausgerichtet ist.

9. Schutzabdeckung nach Anspruch 8,
**dadurch gekennzeichnet,**
**dass** das vordere Schutzabdeckungssegment an einer Linearführung, welche in einer Verfahrrichtung quer zur Führungsrichtung und quer zur Schwenkachse ausgerichtet und am bewegten Maschinenteil anbaubar ist, verschiebbar gelagert ist.

10. Schutzabdeckungsanordnung mit zumindest einer, insbesondere zwei, ersten Schutzabdeckung nach Anspruch 6 oder 7 und mit einer zweiten Schutzabdeckung nach Anspruch 8 oder 9, welche zusammen um die Schwenkachse schwenkbar sind, wobei das vordere Schutzabdeckungssegment der ersten Schutzabdeckung quer neben der zweiten Schutzabdeckung angeordnet ist.

11. Schutzabdeckungsanordnung nach Anspruch 10,
**dadurch gekennzeichnet,**
**dass** eine erste Abdeckfläche der ersten Schutzabdeckung zumindest parallel, insbesondere übereinstimmend, zu einer zweiten Abdeckfläche der zweiten Schutzabdeckung angeordnet ist.

12. Schutzabdeckungsanordnung nach Anspruch 10 oder 11,
**dadurch gekennzeichnet,**
**dass** die zweite Schutzabdeckungsführung seinerseits mit seinem vom bewegten Maschinenteil fernen Ende an der ersten Schutzabdeckungsführung in der ersten Führungsrichtung verschiebbar gelagert ist.

13. Schutzabdeckungsanordnung mit einer ersten Schutzabdeckung nach Anspruch 6 oder 7 und mit einer dritten Schutzabdeckung umfassend eine dritte Schutzabdeckungsführung, welche in der ersten Führungsrichtung ausgerichtet ist, und einer Mehrzahl dritter Schutzabdeckungssegmente, welche jeweils zumindest einen an der dritten Schutzabdeckungsführung gelagerten Stützrahmen und zumindest ein Abdeckelement umfassen und in der Führungsrichtung gegeneinander verschiebbar sind, wobei ein vorderes Schutzabdeckungssegment am beweglichen Maschinenteil anordnenbar ist und ein hinteres Schutzabdeckungssegment an einem von dem bewegten Maschinenteil fernen Ende der dritten Schutzabdeckungsführung befestigt ist, wobei in der Nutzstellung eine von der ersten Schutzabdeckung gebildete ersten Abdeckfläche in einem Winkel von 90° ± 30° zu einer von der dritten Schutzabdeckung gebildeten dritten Abdeckfläche ausgerichtet ist.

14. Schutzabdeckungsanordnung nach Anspruch 13,
**dadurch gekennzeichnet,**
**dass** sich die Abdeckungsverlängerung der ersten Schutzabdeckungssegmente und eine dritte Abdeckungsverlängerung an den dritten Schutzabdeckungssegmenten überlappen.

15. Schutzabdeckungsanordnung nach Anspruch 13 oder 14,
**dadurch gekennzeichnet,**
**dass** zumindest bei einem Teil der Schutzabdeckungssegmente das Abdeckelement des ersten Schutzabdeckungssegments mit dem Abdeckelement des dritten Schutzabdeckungssegments über ein zumindest bereichsweise flexibles Eckabdeckelement verbunden ist.

16. Schutzabdeckungsanordnung nach Anspruch 15,
**dadurch gekennzeichnet,**
**dass** der Faltenbalgabschnitt des ersten Schutzabdeckungssegments mit dem Faltenbalgabschnitt des dritten Schutzabdeckungssegments über einen Eckfaltenbalgabschnitt verbunden ist.

17. Schutzabdeckungsanordnung mit zumindest einer, insbesondere zwei, ersten Schutzabdeckung und einer zweiten Schutzabdeckung nach einem der Ansprüche 10 bis 12 und zumindest einer, insbesondere zwei, dritten Schutzabdeckung nach einem der Ansprüche 13 bis 16.
